# EUROPEAN PATENT SPECIFICATION

(11) **EP 2 607 881 B1**
(45) Date of publication and mention of the grant of the patent: **22.02.2017**
(21) Application number: 11195044.0
(22) Date of filing: 21.12.2011
(51) Int. Cl.: G01N 1/40

(54) **Concentration device**
Konzentrationsvorrichtung
Dispositif de concentration

(43) Date of publication of application: 26.06.2013
(73) Proprietor: Grundfos Holding A/S, 8850 Bjerringbro (DK)
(72) Inventor: Andersen Gad, Jens, 2100 København Ø. (DK); Enemark, Heidi L., 3500 Væerløse (DK); Al-Sabi, Mohammad Nafi Solaiman, 2720 Vanløse (DK); Kurtzhals, Jørgen, 2100 Copenhagen Ø (DK)
(74) Representative: Poulsen, Niels Jakob

(56) References cited:
- WO-A1-89/09646
- WO-A1-2006/080761
- WO-A1-2008/107652
- WO-A1-2008/151093
- WO-A1-2011/042254
- DE-A1- 19 844 310
- US-A1- 2002 141 903
- US-B1- 6 221 255
- T KOBAYASHI ET AL: "Ultrasound enhanced cross-flow membrane filtration", SEPARATION AND PURIFICATION TECHNOLOGY, vol. 17, no. 1, 12 September 1999 (1999-09-12), pages 31-40, XP055301349, NL ISSN: 1383-5866, DOI: 10.1016/S1383-5866(99)00023-4

## Description

The present invention relates to a device and the use of said device for concentration of particles from a volume of liquid. The invention more particularly relates to a device and the use of said device for concentration of protozoan contaminants from a volume of water.

Drinking water quality is monitored around the world to ensure that citizens are not infected with protozoan contaminants, but the known methods for analyzing water for protozoan contaminants are manual and very time consuming. Accordingly, there is risk that people will be infected before an alarm strikes.

There is an urgent need for automated rapid analysis systems for monitoring water for occurrences of protozoan contaminants such as cryptosporidium oocysts and giardia cysts. One of the main challenges in making an apparatus of such sort, is the fact that the medically harmful concentration of these organisms is as low as approximately 10 per litre. This means that it is impossible to make analysis without significant concentration of the drinking water.

Normal means for concentration of water containing protozoan contaminants is by filtration of a larger volume of water and by rinsing same filter in to a smaller volume of water in such a way that contaminants are moved from the filter into said smaller water volume. Normally a concentrated sample of 1 ml or less is needed for analysis which means that said smaller water volume used for rinsing the filter needs to be concentrated additionally. This is typically done by centrifugation and following removal of water. Hereby bottom sediment of needed volume is available.

All these manual steps are not only time consuming but also ineffective in terms of recovery rate. Due to the filter type, the method of rinsing the filter and the many manual handling steps, the recovery rate of the traditional way of concentrating water for this purpose is between 30-50%. This means that only 30-50% of the contaminants caught on the filter end up in the sample used for analysis. Furthermore, a downside to this type of concentration is, that irrelevant particles smaller that the sought contaminants are accumulated on the filter and thereby in the sample for analysis, despite the fact that the pore size of the filter should allow them to pass. It is well known that particles smaller than the pore size of a filter will be retained due to clumping and other phenomena.

Ultrasound cleaning baths are well known for their ability to gently clean submerged items such as filters very efficiently and the literature shows record of tests where ultrasound cleaning baths are used as a method for rinsing protozoan contaminants of filters for later collection. These ultrasound cleaning baths are driven by one or more ultrasound transducers that are attached to the tank wall and make this tank wall vibrate at 20-100 kHz depending on type of cleaning. The vibration in the water volume causes imploding cavitation bubbles that create multiple high velocity jets in arbitrary directions. These jets have the ability to remove particles and dirt from surfaces mechanically. It is critical for the cleaning process that the item, subject to the cleaning, is totally wetted and that no air or gas bubbles are present. Air bubbles in the water will decrease the cavitation and thereby the cleaning significantly.

Ultrasonic cavitation in water is also well known as a method for smashing cell walls to harvest proteins and/or DNA in laboratories. Ultrasonic cleaning of protozoan contaminants from filters has to be carefully adjusted so that their recognisability and usability is not compromised.

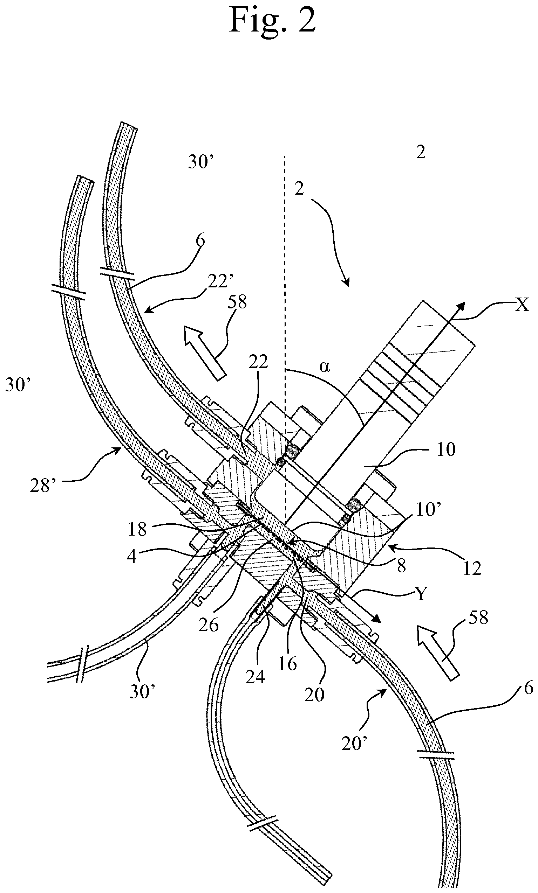

The article "Ultrasound enhanced cross-flow membrane filtration" (T. Kobayashi et al., Vol. 17, Issue 1, 12 Sep. 1999, p. 31-40) concerns the ultrasound effect on a permeate flux of dextran solutions through polyacrylonitrile ultrafiltration membranes. A schematic diagram of the cross-flow experimental set-up is provided in Fig. 2 of this article.

It is an object for the present invention to specify a concentration device and a method that enables automated and rapid concentration of particles.

It is further an object of the present invention to specify a concentration device and a method that makes it possible to carry out automated and fast concentration of protozoan contaminants from a volume of water.

These and other objects and advantages of the present invention will be apparent from the following description and the appended claims.

The objects of the present invention can be accomplished by a use of a concentration device as described in claim 1 and a concentration device as described in claim 3.

The concentration device according to the invention is a concentration device for filter filtration concentration of particles from a volume of a fluid, which concentration device comprises a filter configured to filter particles of a predefined size in the volume of the fluid. The concentration device comprises an ultrasonic transducer that is configured to clean the filter.

Hereby it is achieved that the ultrasonic transducer can clean the filter during filtration so that the concentration device is capable of enabling larger volume of fluid to be filtered during a given time period. A higher average flux can be achieved because the filter in the concentration device is kept cleaner.

By using a concentration device having an ultrasonic transducer configured to clean the filter, it is possible to carry out automated and rapid concentration of particles in a fluid. The concentration device is in particular capable of carrying out automated and fast concentration of protozoan contaminants from a volume of water.

The particles may be any kind of particles. The particles may be organic particles or inorganic particles. The concentration device is capable of concentrating particles of a predefined size in a fluid.

The fluid is preferably a liquid e.g. a water containing or oil containing fluid.

The ultrasonic transducer may be any kind of ultrasonic transducer capable of generating ultrasonic sound waves that can be used for cleaning the filter and/or keeping the filter clean.

The concentration device comprises a housing having a cavity which is separated into a first volume and a second volume by the filter. Hereby different inlets and/or outlets can be independently connected to the first volume and the second volume.

Preferably the filter is detachable mounted in the housing so that the filter may easily be replaced.

The housing has an inlet being in fluid communication with the first volume, and that the housing has an outlet being in fluid communication with the second volume and that the particles are concentrated in the first volume. Hereby the concentrate can easily be retained in the first volume while the filtrate is removed through the outlet in the second volume.

The housing has a concentrate outlet being in fluid communication with the first volume and the concentration device comprises means for pumping concentrate from the first volume out through the concentrate outlet.

Hereby the concentrate can be transported away from the first volume through the concentrate outlet. The means for pumping may be a pump, e.g. a peristaltic pump or another suitable pump.

The housing has a concentrate outlet being in fluid communication with the first volume and the concentration device comprises means for pumping concentrate away from the first volume to an analysis device or a collection container through the concentrate outlet.

Hereby the concentrate can be transported to an analysis device or a collection container through the concentrate outlet.

It is preferred that the concentration device comprises means for providing gas or air on each side of a volume of concentrate and to pump away the volume of concentrate while keeping gas or air on each side of a volume of concentrate.

Hereby the concentrate can be transported out of the first volume without being diluted. Thus a high concentration of the concentrate can be maintained even when the concentrate is being transported.

It may be an advantage that the total volume of concentrate can be located in a concentrate outlet pipe and be transported out of the first volume through a concentrate outlet by pushing air into a gas inlet pipe. Hereby it is possible to control the positioning of the concentrate in the concentrate outlet pipe by controlling the amount of air or gas that is blown or pumped into the first volume.

It may be beneficial that the concentration device comprises a control unit configured to operate the ultrasonic transducer in:
- an inactive state,
- a first cleaning state,
- a second cleaning state, and
- a third cleaning state
where the ultrasonic transducer is inactive in the inactive state and where the ultrasonic transducer in the first cleaning state transmits a first predefined number of ultrasonic waves towards the filter during a first duration and where the ultrasonic transducer in the second cleaning state transmits a second predefined number of ultrasonic waves towards the filter during a second duration and where the ultrasonic transducer in the third cleaning state transmits a third predefined number of ultrasonic waves towards the filter during a third duration when the concentrate has been removed from the first volume.

Hereby it is possible to control the ultrasonic transducer to be inactive, have a first level of activity (e.g. for cleaning during filtration) and having a second level of activity to loosen particles from the filter into the second volume and a third level of activity during cleaning of the filter after concentrate has transported away from the first volume.

Since the cleaning process is most efficient when the pressure of the fluid is low, it is preferred that the concentration device is configured to reduce the pressure of the fluid in the second volume when the ultrasonic transducer is active.

It is preferred that the control device is configured to detect the flow through the inlet and/or the pressure difference across the filter that is arranged between the first volume and the second volume.

It may be an advantage that the concentration device is configured to initiate and perform ultrasonic cleaning of the filter during filtration.

Hereby a high flux can be maintained and the concentration device can be used to concentrate large volumes of fluid.

It is preferred that the concentration device is configured to automatically initiate ultrasonic cleaning of the filter during filtration on the basis of measurements of the flow through the inlet and/or the pressure gradient across the filter.

It may be beneficial that concentration device comprises metal filter. A metal filter can be robust and be used in different types of fluids.

It is preferred that the filter comprises an electroformed nickel screen. A filter comprising an electro formed nickel screen is robust and makes it possible to use the concentration device in different applications. Moreover, it is possible to provide electro formed nickel screen containing filters that have homogeneous hole densities.

It may be an advantage that the concentration device is configured to concentrate particles in the size range between 0.1-500 µm, preferable 1-50 µm.

It may be an advantage that the concentration device is configured to concentrate protozoan contaminants since knowledge of these particles is of great importance in relation to e.g. water quality detection.

It may be beneficial that the concentration device is configured to concentrate cryptosporidium oocysts and giardia cysts that are important in relation to e.g. water quality detection.

The ultrasonic transducer has a driving surface arranged in the second volume. Hereby it is achieved that the ultrasonic sound waves will cause imploding cavitation bubbles that create multiple high velocity jets that can be used to clean the filter.

It is preferred that the driving surface of the ultrasonic transducer extends parallel to and is configured to send ultrasonic sound waves towards the filter. Hereby the most efficient and effective use of the ultrasonic transducer can be achieved.

It may be an advantage that the filter extends basically perpendicular to longitudinal axis of the transducer.

It is an advantage to have an analysis system comprising a concentration device according to the invention. The analysis system may be configured to detect water quality. Large particles such as protozoan contaminants (e.g. cryptosporidium oocysts and giardia cysts) in a fluid can normally only be analysed when the fluid has been concentrated. Therefore, an analysis system comprising a concentration device according to the invention may be of great use when dealing with water quality detection.

It may be an advantage that the analysis system comprises an analysis device configured to analyse concentrate from the concentration device, a pump configured to pump concentrate from the concentration device into the analysis device. Such analysis system is capable of bringing concentrate from the concentration device into the analysis device and then analyse the concentrate. Accordingly, an analysis system of this type is highly suitable for use in water quality detection.

It is preferred that cleaning of the filter during filtration is controlled on the basis of determination(s) of flow and/or pressure difference across the filter. Determination(s) may be carried out by direct measurements, estimations or calculations based on any suitable parameters. The flow is preferably the flow through the filter. This flow may, by way of example, be measured as the flow through the inlet pipe.

It is preferred that cleaning of the filter during filtration is controlled on the basis of measured flow (through the inlet, the inlet pipe, the outlet or the outlet pipe) and/or the pressure difference across the filter.

The flow may be measured by any suitable measurement tool, e.g. a flow sensor. It is possible to measure the flow by means of a pump providing the pressure causing the flow.

The pressure difference across the filter may be measured by any suitable pressure sensor and it is possible to measure the pressure through pressure channels being in fluid communication with the first volume and with the second volume, respectively.

Use of the device makes it possible to conduct an automated and rapid concentration of particles in a fluid. The use of the device in particular makes it possible to carry out automated and fast concentration of protozoan contaminants from a volume of water.

It may be an advantage that the concentration device is configured to be arranged in a tilted position so that air bubbles can easily escape from the filtered fluid outlet.

Preferred embodiments of the present invention will now be more particularly described, by way of example, with reference to the accompanying drawing, wherein:
- Fig. 1a): shows a cross sectional view of the concentration device according to the invention;
- Fig. 1b): shows a perspective view of the concentration device shown in Fig. 1a);
- Fig. 2: shows a cross sectional view of a concentration device where fluid is being pumped into the concentration device;
- Fig. 3: shows how the ultrasonic transducer is used to clean the filter in the concentration device;
- Fig. 4: shows how air is blown into the concentration device;
- Fig. 5: shows how the concentrate is pumped out of the concentration device without diluting the concentrate;
- Fig. 6: shows how the filter is cleaned by a backwash procedure;
- Fig. 7: shows an analysis system according to the invention and
- Fig. 8: shows the analysis system shown in Fig. 7 while concentrate is pumped into the analysis device.

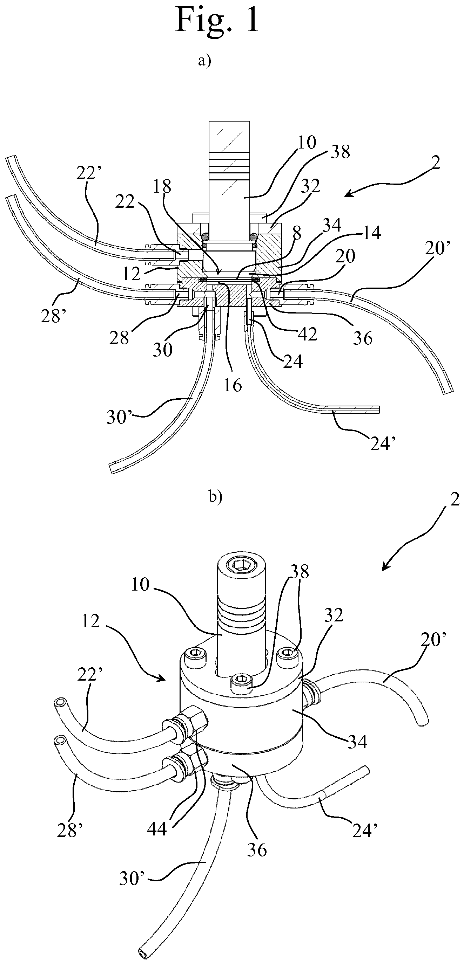

Referring now in detail to the drawings for the purpose of illustrating preferred embodiments of the present invention, elements of a concentration device 2 according to the present invention is illustrated in Fig. 1. Fig. 1 a) is a cross-sectional view of a concentration device 2 according to the invention.

The concentration device 2 comprises a housing 12 having a top member 32, a bottom member 36 and an intermediate member 34 sandwiched between the top member 32 and the bottom member 36. The top member 32 is fixed to the intermediate member 34 by means of bolts 38. The top member 32, the intermediate member 34 and the bottom member 36 may be fixed to one another by various means.

The concentration device 2 further comprises a cavity 14 having a first volume 16 and a second volume 18 separated by a filter 8. The filter 8 is mounted by means of gaskets 42 arranged in a groove provided in the bottom member 36. The filter can easily be replaced by unscrewing the bolts 38, disassembling the bottom member 36 and the intermediate member 34 of the housing 12 and removing the gaskets 42 that keep the filter 8 in place.

The concentration device 2 has an inlet 20 connected to an inlet pipe 20'. When the concentration device 2 is used to concentrate particles such as protozoan contaminants from water, the raw water enters the concentration device 2 through the inlet pipe 20' and the inlet 20. The concentration device 2 further comprises an outlet 22 connected to an outlet pipe 22'. The outlet 22 is in fluid communication with the second volume 18 while the inlet 20 is in fluid communication with the first volume 16.

A concentrate outlet pipe 24' is connected to a concentrate outlet 24 at the bottom member 36 of the housing 12. The concentrate outlet 24 is used when concentrate is pumped out of the concentration device 2. A gas inlet pipe 30' is connected to a gas inlet 30 provided at the bottom member 36 of the housing. Furthermore, an outlet pipe 28' is connected to an outlet 28 provided in the bottom member 36 of the housing 12. This outlet 28 may be used as backwash outlet during backwash procedures.

Fig. 1 b) illustrates a perspective view of the concentration device 2 shown in Fig. 1 a). It can be seen that the housing 12 comprises a top member 32, an intermediate member 34 and a bottom member 36 and that bolts 38 are used to hold the members 32, 34, 36 of the housing 12 together.

The pipes 20', 22', 24', 28', 30' are connected to the housing 12 by means of tightening members 44 that are sealingly screwed on the housing 12.

Fig. 2 illustrates a cross-sectional close-up view of the concentration device 2 shown in Fig. 1. The concentration device 2 has been tilted with a tilt angle α of about 30 degrees in order to facilitate removal of air bubbles from the filtered fluid outlet 22. It may be an advantage that the concentration device 2 is configured to be arranged in a tilted position so that air bubbles can easily escape from the filtered fluid outlet 22. The concentration device 2 may be used to concentrate different types of fluid 6. It is possible to concentrate water in order to analyse contaminants through photographing of the concentrate and image analysis. The concentration device 2 shown in Fig. 1-2 is adapted to concentration of a fluid with any size specific particles from 1 micron to 1000 micron.

In Fig. 2 raw fluid (e.g. from a water board) enters the concentration device 2 through the inlet 20 via the inlet pipe 20'. The flow direction is indicated with an arrow 58. When fluid 6 is pumped into the first volume 16 of the housing 12 with a sufficient large pressure the fluid 6 passes the filter 8, enters the second volume 18 of the housing 12 and leaves the concentration device 2 through the outlet 22. It can be seen that fluid is present in both the outlet pipe 22', the outlet pipe 28', in the inlet pipe 20', and in the concentrate outlet 24. The flow direction is indicated by arrows 58.

The filter 8 is plate-shaped and extends parallel to its longitudinal axis Y that extends basically perpendicular to longitudinal axis X of the ultrasonic transducer 10. The driving surface 10' of the ultrasonic transducer 10 is arranged in the second volume 18. Hereby the ultrasonic transducer 10 has optimal conditions for cleaning the filter 8. In order to provide an effective cleaning of the filter 8, the driving surface 10' of the ultrasonic transducer 10 is parallel to and points towards the filter surface. The distance from the ultrasonic transducer 10 to the filter 8 is selected such that the ultrasonic sound waves 11 are capable of cleaning the filter 8 from particles 4 being adhered to the filter 8 by mechanically removing the particles 4 from the filter 8.

The concentration device 2 filters a given volume of fluid, e.g. water during a given time period. The duration of the time period depends on the filter size, pore size, the pressure across the filter 8, and the turbidity of the fluid 6. During filtration, the flow (through the inlet 20) and/or the pressure across the filter 8 is being monitored.

One way of keeping the filter 8 clean is to activate the ultrasonic transducer 10 when the flow has decreased to under a predefined level. The ultrasonic transducer 10 is activated to clean the filter 8 and ensure that clusters of too small particles are broken up and are passed through the filter 8.

The concentration device 2 may be configured to use ultrasonic cleaning of the filter 8 during filtration, with least possible ultrasonic activity (intensity and duration). The ultrasonic cleaning of the filter 8 in the concentration device 2 enables a larger volume of fluid 6 to be filtered during a given time period due to a higher average flux. Besides, the ultrasonic cleaning of the filter 8 in the concentration device 2 will facilitate the sorting on the surface of the filter 8 by breaking up clusters of too small particles.

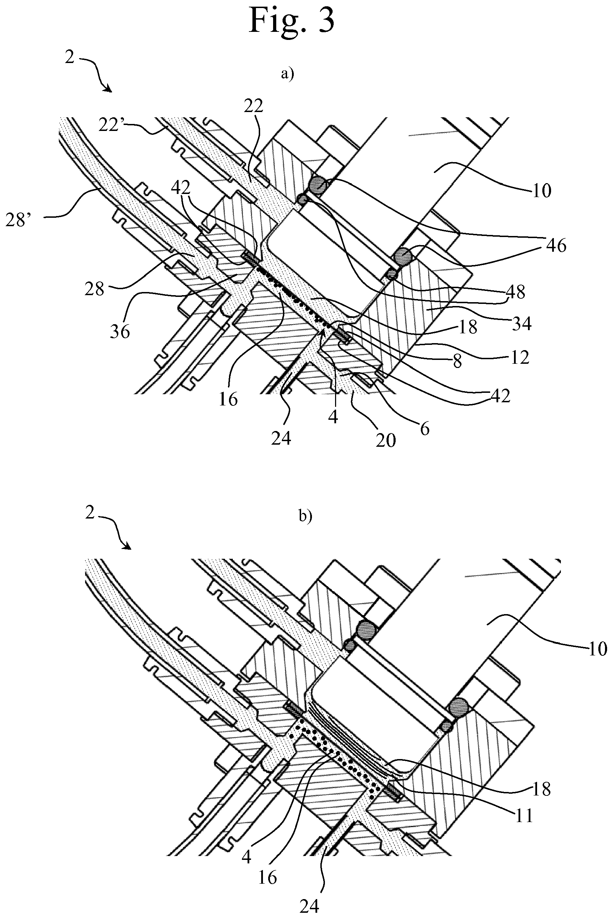

Fig. 3 a) is a close-up view of the concentration device 2 shown in Fig. 2. In Fig. 3 a) fluid 6 has been pumped into the inlet 20 of the housing 12. The fluid 6 has been filtered by being transported from the first volume 16 through the filter 8 into the second volume 18 and further through the outlet pipe 22' via the outlet 22. Fluid 6 is also present in the backwash outlet 28, in the backwash outlet pipe 28' and in the concentrate outlet 24.

The filter 8 is arranged between the intermediate member 34 and the bottom member 36. The filter 8 is secured to the intermediate member 34 and the bottom member 36 by means of gaskets 42.

A plurality of particles 4 have been retained by the filter 8 and these particles 4 are located close to the filter 8 at that side of the filter 8 that abuts the second volume 18. The ultrasonic transducer 10 is held in place by an O-ring 46. Another O-ring 48 seals the ultrasonic transducer 10 against fluid 6 from the first volume 16 and the outlet 22. In Fig. 3 b) the ultrasonic transducer 10 is activated and the ultrasonic sound waves 11 are indicated. The imploding cavitation bubbles cause the cleaning by loosing the particles 4 from the filter 8 and distributing the particles 4 in the first volume 16. The ultrasonic sound waves 11 are only illustrating activity of the ultrasonic transducer.

The ultrasonic sound waves 11 create vibrations in the fluid in both the first volume 16 and in the second volume 18. These vibrations cause imploding cavitation bubbles that create multiple high velocity jets in arbitrary directions. These jets influence the filter 8 mechanically and hereby loosen the particles 4 from the filter 8. This cleaning process can occur when there is fluid 6 in both volumes 16, 18 and when there is no or a very small concentration of air or gas bubbles present. Air bubbles in the fluid 6, will decrease the cavitation and thereby the cleaning significantly.

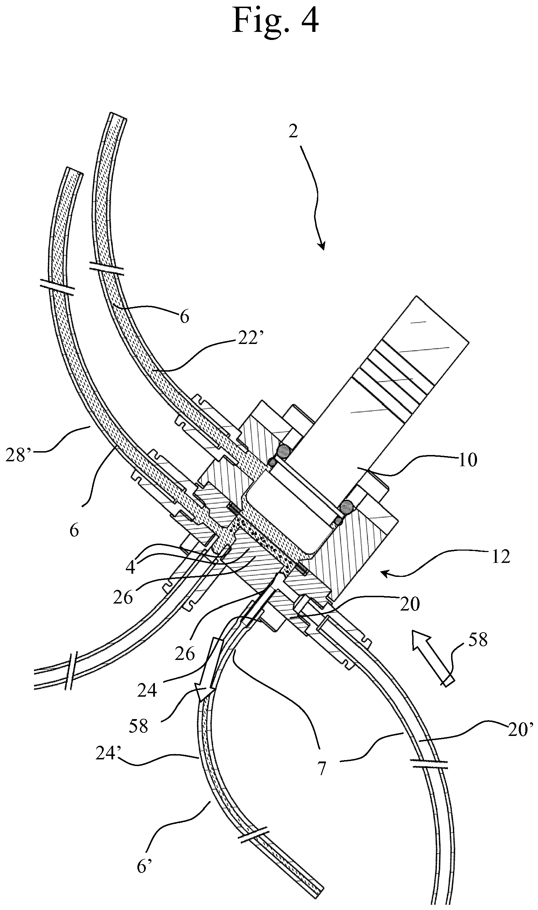

Fig. 4 illustrates how air 7 is blown into the concentration device 2. Air 7 enters the inlet 20 of the housing 12 and is further guided through the concentrate outlet 24 and further through the concentrate outlet pipe 24'. It can be seen that a volume of fluid 6' have been pushed away from the inlet 20 and the concentrate outlet 24 towards the distal end of the concentrate outlet pipe 24'. The air 7 is used to empty the inlet 20 and the concentrate outlet 24. The flow direction of the air 7 is indicated with arrows 58.

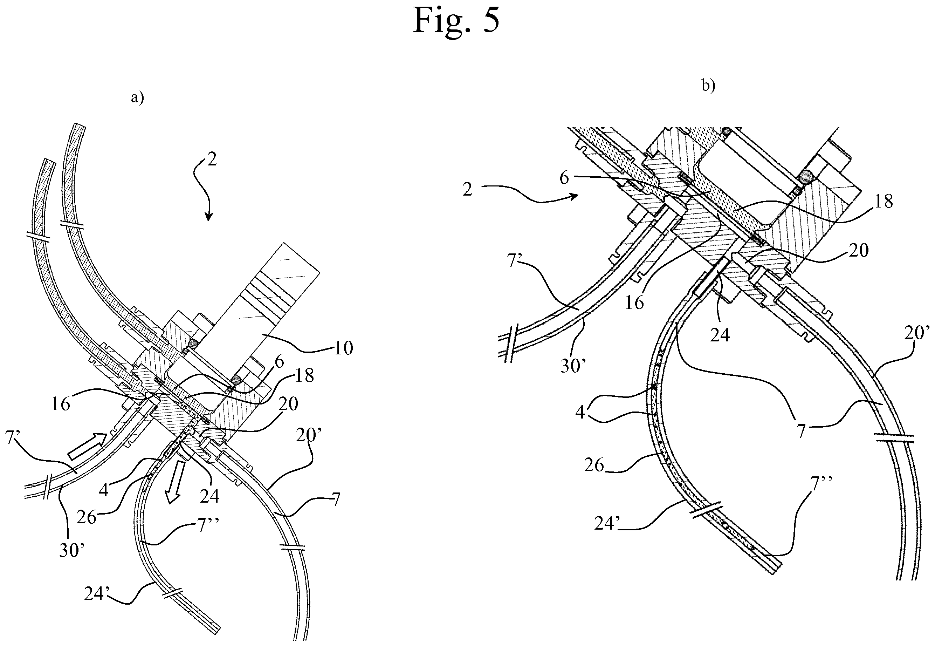

This procedure is conducted in order to prepare the transport of concentrate 26 from the first volume 16 as illustrated in Fig. 5.

Fig. 5 a) illustrates how the concentrate 26 is being transported from the first volume 16 through the concentrate outlet pipe 24'. A further analysis of the concentrate 26 can be carried out when the concentrate 26 has been transported away from the first volume 16. By way of example it is possible to analyse the concentrate 26 through photographing and image analysis.

In Fig. 5 a) there is still air or gas 7 in the inlet pipe 20' and in the inlet 20. Additional air or gas 7' is blown into the first volume 16 through the gas inlet pipe 30'. In Fig. 5a) air or gas 7' has pushed away a major part of the concentrate 26 in the first volume 16. The remaining portion of the concentrate 26 is pushed through the concentrate outlet 24 and the proximal part of the concentrate outlet pipe 24'. The filtered fluid 6 in the second volume 18 will not run back to the first volume 16 due to the pressure created by introducing air or gas 7' into the first volume 16. Air or gas 7" is present in the concentrate outlet pipe 24'. In fact, air or gas 7', 7" is introduced at both sides of the concentrate 26. Accordingly, air or gas surrounds the concentrate 26.

In Fig. 5 b) more air or gas 7' has been pumped into the first volume 16. In fact the entire first volume is filled with air or gas 7', which has pushed the concentrate 26 further towards the distal end of the concentrate outlet pipe 24'. In Fig. 5 b) the total volume of concentrate 26 is located in the concentrate outlet pipe 24'. Thus, the concentrate 26 is transported out of the concentrate outlet 24 by pushing air into gas inlet pipe 30' without diluting the concentrate 26 with an additional volume of fluid. Besides it is possible to control the positioning of the concentrate 26 in the concentrate outlet pipe 24' by controlling the amount of air or gas 7' that is blown or pumped into the first volume 16.

The concentrate 26 is located in the concentrate outlet pipe 24' can now be pumped further towards the distal end of the concentrate outlet pipe 24' for further analysis (e.g. by photographing and image analysis that may be carried out in an analysis device being in fluid communication with the concentrate outlet pipe 24').

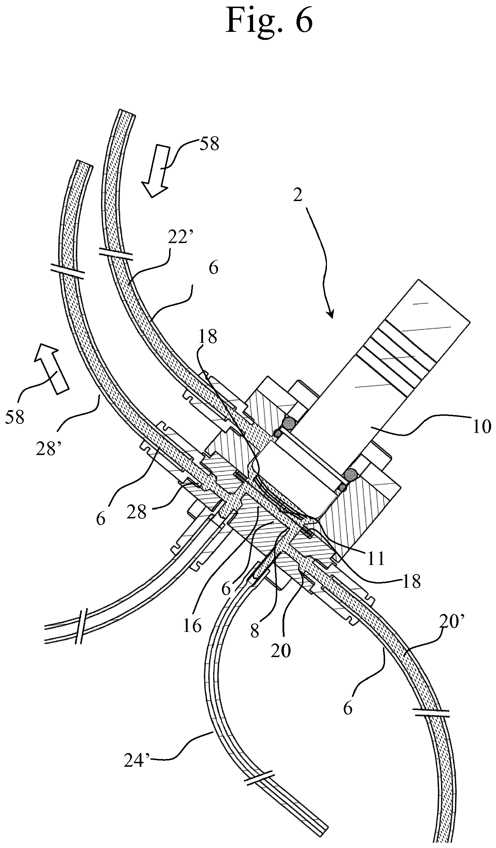

When the concentrate 26 has been transported away to the intended place, the concentration device 2 is cleaned by a backwash procedure (shown in Fig. 6)

In Fig. 6 fluid 6 is pumped into the second volume 18 through the outlet pipe 22' and the outlet 22 (thus the outlet 22 function as inlet and the outlet pipe 22' function as inlet pipe during this cleaning process). The fluid 6 is pumped through the second volume 18 and further through the filter and out of the backwash outlet pipe 28' via the backwash outlet 28. The flow direction is indicated with arrows 58. The ultrasonic transducer 10 is activated and sends out ultrasonic waves 11 towards the filter 8. Hereby the filter 8 is cleaned and the ultrasonic waves 11 can tear off dirt that is stuck on the surface of the filter 8. The dirt is then transported away with the fluid 6 through the backwash outlet 28 and the backwash outlet pipe 28'.

It is possible to stop the filtering process at any time and activate the ultrasonic transducer 10 in order to clean the filter 8. However, when the concentrate 26 has been transported away to the intended place (e.g. for further analysis) the concentration device 2 is carefully cleaned by the backwash procedure described above. It is possible to measure the pressure gradient across the filter 8 and/or the flow of fluid 6 through the inlet 20 and use these measurements to decide if a cleaning process (for cleaning the filter 8) is required.

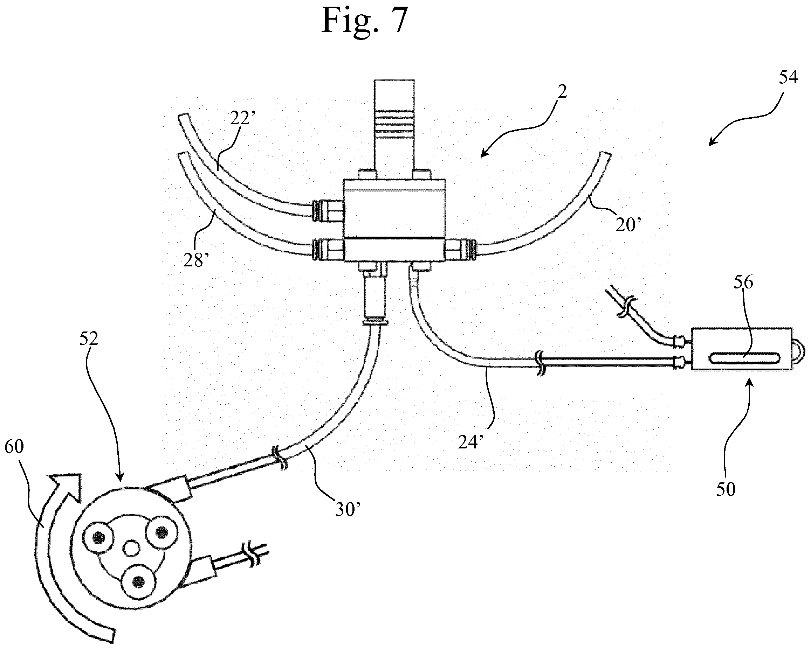

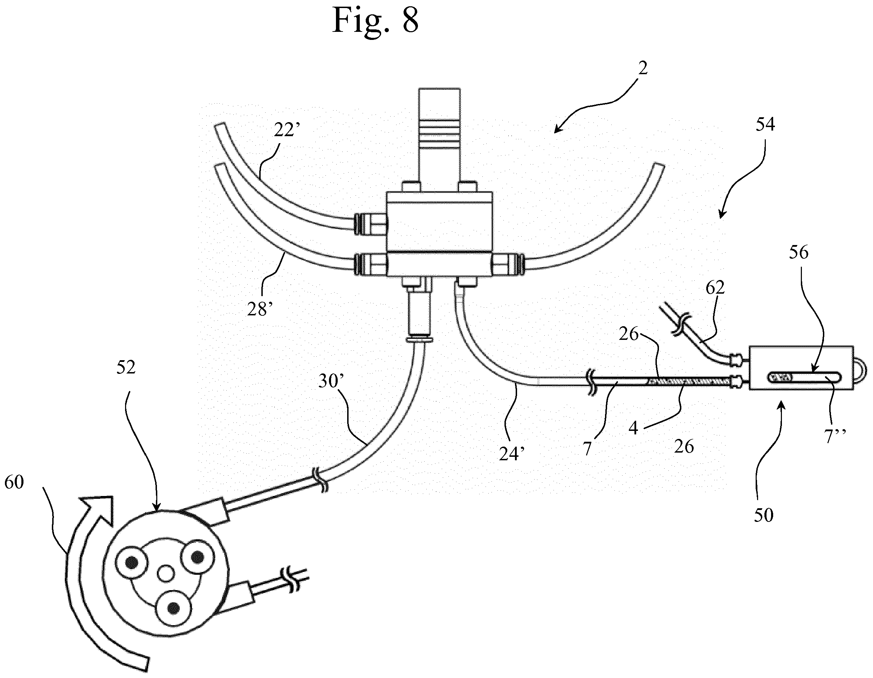

Fig. 7 illustrates a part of an analysis system 54. The analysis system 54 comprises an analysis device 50 configured to analyse concentrate from a concentration device 2 like the one illustrated in Fig. 1-6. The analysis system 54 furthermore comprises a peristaltic pump 50. Other types of pumps may be used. The pump 50 is used to pump concentrate 26 into the analysis device 50 via the concentrate outlet pipe 24'. The rotational direction 60 of the peristaltic pump 50 is indicated in Fig. 7 and Fig. 8.

A window 56 is provided in the analysis device 50. The window 56 is configured to be used in a photographing process, where the one or more images of the concentrate 26 (illustrated in Fig. 8) are recorded by using an acquiring device (e.g. a camera). Subsequent image analysis may be carried out on the basis of recorded images.

Fig. 8 illustrates the analysis system 54 shown in Fig. 7 while concentrate 26 is pumped into the analysis device 50. A portion of the concentrate 26 is visible through the window 56 in the analysis device 50.

The concentrate 26 is pumped through the concentrate outlet pipe 24' and contains a plurality of particles 4. Air or gas 7, 7" is provided at each side of the concentrate 26. By pumping additional air or gas 7 through the concentrate outlet pipe 24', the concentrate 26 can be positioned in the analysis device 50 so that the concentrate 26 is visible in the window 56. In this way one or more images of the concentrate 26 can be recorded by using an acquiring device (not shown), which may be a camera. Further analysis of the one or more images of the concentrate 26 can then be conducted.

The concentrate 26 is drained away through the outlet pipe 62 when the intended analysis of the concentrate 26 has been conducted. The concentrate 26 may, by way of example, be pumped into a collecting container or drainage.

It is possible to apply a sequence of analysis steps each comprising the step of pumping a portion or volume of the concentrate 26 into the analysis device 50 and then take one or more images of the concentrate 26. When the analysis of a portion or volume of the concentrate 26 has been conducted an additional portion or volume of the concentrate 26 may be pumped into the analysis device 50 in order to take one or more images of the additional portion or volume of the concentrate 26.

### List of reference numerals

- 2: - Concentration device
- 4: - Particle
- 6, 6': - Fluid (liquid)
- 7, 7', 7": - Gas (air)
- 8: - Filter
- 10: - Ultrasonic transducer
- 10': - Driving surface of the ultrasonic transducer
- 11: - Ultrasonic sound wave
- 12: - Housing
- 14: - Cavity
- 16: - First volume
- 18: - Second volume
- 20: - Inlet (raw fluid inlet)
- 20': - Inlet pipe (raw fluid inlet pipe)
- 22: - Outlet (filtrate outlet)
- 22': - Outlet pipe (filtrate outlet pipe)
- 24: - Concentrate outlet
- 24': - Concentrate outlet pipe
- 26: - Concentrate
- 28: - Outlet (backwash outlet)
- 28': - Outlet pipe (backwash outlet pipe)
- 30: - Gas inlet
- 30': - Gas inlet pipe
- 32: - Top member
- 34: - Intermediate member
- 36: - Bottom member
- 38: - Bolt
- 40: - Filtrate
- 42: - Gasket
- 44: - Tightening members
- α: - Tilt angle
- 46: - O-ring
- 48: - O-ring
- 50: - Analysis device
- 52: - Pump
- 54: - Analysis system
- 56: - Window
- 58: - Arrow
- 60: - Rotational direction
- 62: - Outlet pipe

## Claims

1. Use of a concentration device (2) for monitoring drinking water quality by image analysis of protozoan contaminants after filtration, wherein said device (2) comprises:
a filter (8) configured to filter particles (4) of a predefined size in the volume of the fluid (6) wherein the concentration device (2) comprises an ultrasonic transducer (10) that is configured to clean the filter (8);
and wherein the concentration device (2) comprises a housing (12) having a cavity (14), which cavity (14) is separated into a first volume (16) and a second volume (18) by the filter (8);
wherein the housing (12) has an inlet (20) being in fluid communication with the first volume (16) and the housing (12) has an outlet (22) being in fluid communication with the second volume (18) and that the particles (4) are concentrated in the first volume (16); and wherein the ultrasonic transducer (10) has a driving surface (10') arranged in the second volume (18);
wherein the housing (12) has a concentrate outlet (24) being in fluid communication with the first volume (16) and that the concentration device (2) comprises means for pumping concentrate (26) away from the first volume (16) to an analysis device (50) or a collection container for further analysis through the concentrate outlet (24); wherein said filter (8) is plate-shaped.

2. The use according to claim 1, wherein said device (2) is configured to concentrate *cryptosporidium oocysts* and *giardia cysts.*

3. A concentration device (2) for filtration concentration of particles (4) from a volume of a fluid (6) for monitoring water for occurrences of protozoan contaminants,
which concentration device (2) comprises a filter (8) configured to filter particles (4) of a predefined size in the volume of the fluid (6),
wherein the concentration device (2) comprises an ultrasonic transducer (10) that is configured to clean the filter (8);
and wherein the concentration device (2) comprises a housing (12) having a cavity (14), which cavity (14) is separated into a first volume (16) and a second volume (18) by the filter (8);
wherein the housing (12) has an inlet (20) being in fluid communication with the first volume (16) and the housing (12) has an outlet (22) being in fluid communication with the second volume (18) and that the particles (4) are concentrated in the first volume (16); and wherein the ultrasonic transducer (10) has a driving surface (10') arranged in the second volume (18); wherein the housing (12) has a concentrate outlet (24) being in fluid communication with the first volume (16) and that the concentration device (2) comprises means for pumping concentrate (26) away from the first volume (16) to an analysis device (50) or a collection container for further analysis through the concentrate outlet (24); wherein said filter (8) is plate-shaped.

4. The concentration device (2) according to claim 3, wherein said concentration device (2) is configured to concentrate *Cryptosporidium* oocysts and *Giardia* cysts.

5. The concentration device (2) according to claim 3 or 4, **characterised in that** the concentration device (2) comprises means for providing gas or air on each side of a volume of concentrate (26) and to pump away the volume of concentrate (26) while keeping gas or air on each side of a volume of concentrate (26).

6. A concentration device (2) according to any of the claims 3-5, **characterised in that** the concentration device (2) is configured to initiate and perform ultrasonic cleaning of the filter (8) during filtration.

7. A concentration device (2) according to any of the claims 3-6, wherein said filter (8) is detachably mounted.

8. A concentration device (2) according to any of the claims 3-7, **characterised in that** concentration device (2) comprises a metal filter (8).

9. A concentration device (2) according to claim 8 **characterised in that** the filter (8) comprises an electro formed nickel screen.

10. A concentration device (2) according to claim 9, wherein said filter (8) has homogenous hole densities.

11. A concentration device (2) according to any of the claims 3-10 **characterised in that** the driving surface (10') of the ultrasonic transducer (10) extends parallel to and is configured to send ultrasonic sound waves (11) towards the filter (8).

12. A concentration device (2) according to any of the claims 3-11, wherein said filter (8) extends basically perpendicular to the longitudinal axis of said transducer (10).

13. An analysis system (54) for subjecting a concentrate (26) to image analysis, said analysis system (54) comprising a concentration device (2) according to claim 3.

14. The analysis system (54) according to claim 13, wherein said device (2) is configured to concentrate *cryptosporidium oocysts* and *giardia cysts.*

## Patentansprüche

1. Verwendung einer Konzentrationsvorrichtung (2) zum Überwachen einer Trinkwasserqualität durch eine Analyse von Protozoenschadstoffen nach Filtration, wobei die Vorrichtung (2) umfasst:
einen Filter (8), der konfiguriert ist, Partikel (4) einer vordefinierten Größe im Volumen des Fluid (6) zu filtern, wobei die Konzentrationsvorrichtung (2) einen Ultraschallwandler (10) umfasst, der konfiguriert ist, den Filter (8) zu reinigen;
und wobei die Konzentrationsvorrichtung (2) ein Gehäuse (12) mit einem Hohlraum (14) umfasst, welcher Hohlraum (14) durch den Filter (8) in ein erstes Volumen (16) und ein zweites Volumen (18) getrennt ist;
wobei das Gehäuse (12) einen Einlass (20) hat, der in strömungstechnischer Verbindung mit dem ersten Volumen (16) steht, und das Gehäuse (12) einen Auslass (22) hat, der in strömungstechnischer Verbindung mit dem zweiten Volumen (18) steht, und dass die Partikel (4) im ersten Volumen (16) konzentriert sind; und wobei der Ultraschallwandler (10) eine Antriebsfläche (10') hat, die im zweiten Volumen (18) angeordnet ist;
wobei das Gehäuse (12) einen Konzentratauslass (24) hat, der in strömungstechnischer Verbindung mit dem ersten Volumen (16) steht und dass die Konzentrationsvorrichtung (2) Mittel zum Pumpen des Konzentrats (26) durch den Konzentratauslass (24), aus dem ersten Volumen (16) hin zu einer Analysevorrichtung (50) oder einem Sammelbehälter für eine weitere Analyse umfasst; wobei der Filter (8) plattenförmig ist.

2. Verwendung nach Anspruch 1, wobei die Vorrichtung (2) konfiguriert ist, *Cryptosporidium-Oozysten* und *Giardia-Zysten* zu konzentrieren.

3. Konzentrationsvorrichtung (2) zur Filterung einer Konzentration von Partikeln (4) aus einem Volumen eines Fluids (6) zum Überwachen von Wasser auf Protozoenschadstoffe,
welche Konzentrationsvorrichtung (2) einen Filter (8) umfasst, der konfiguriert ist, Partikel (4) einer vordefinierten Größe im Volumen des Fluids (6) zu filtern,
wobei die Konzentrationsvorrichtung (2) einen Ultraschallwandler (10) umfasst, der konfiguriert ist, den Filter (8) zu reinigen;
und wobei die Konzentrationsvorrichtung (2) ein Gehäuse (12) mit einem Hohlraum (14) umfasst, welcher Hohlraum (14) durch den Filter (8) in ein erstes Volumen (16) und ein zweites Volumen (18) getrennt ist;
wobei das Gehäuse (12) einen Einlass (20) hat, der in strömungstechnischer Verbindung mit dem ersten Volumen (16) steht, und das Gehäuse (12) einen Auslass (22) hat, der in strömungstechnischer Verbindung mit dem zweiten Volumen (18) steht und dass die Partikel (4) im ersten Volumen (16) konzentriert sind; und wobei der Ultraschallwandler (10) eine Antriebsfläche (10') hat, die im zweiten Volumen (18) angeordnet ist;
wobei das Gehäuse (12) einen Konzentratauslass (24) hat, der in strömungstechnischer Verbindung mit dem ersten Volumen (16) steht, und dass die Konzentrationsvorrichtung (2) Mittel zum Pumpen des Konzentrats (26) durch den Konzentratauslass (24), aus dem ersten Volumen (16) hin zu einer Analysevorrichtung (50) oder einem Sammelbehälter für weitere Analyse umfasst; wobei der Filter (8) plattenförmig ist.

4. Konzentrationsvorrichtung (2) nach Anspruch 3, wobei die Konzentrationsvorrichtung (2) konfiguriert ist, *Cryptosporidium-Oozysten* und *Giardia-Zysten* zu konzentrieren.

5. Konzentrationsvorrichtung (2) nach Anspruch 3 oder 4, **dadurch gekennzeichnet, dass** die Konzentrationsvorrichtung (2) Mittel zum Bereitstellen von Gas oder Luft an jeder Seite eines Volumens von Konzentrat (26) und zum Abpumpen des Volumens von Konzentrat (26), während Gas oder Luft an jeder Seite eines Volumens von Konzentrat (26) gehalten wird, umfasst.

6. Konzentrationsvorrichtung (2) nach einem der Ansprüche 3 - 5, **dadurch gekennzeichnet, dass** die Konzentrationsvorrichtung (2) konfiguriert ist, eine Ultraschallreinigung des Filters (8) während der Filtration zu veranlassen und durchzuführen.

7. Konzentrationsvorrichtung (2) nach einem der Ansprüche 3 - 6, wobei der Filter (8) abnehmbar montiert ist.

8. Konzentrationsvorrichtung (2) nach einem der Ansprüche 3 - 7, **dadurch gekennzeichnet, dass** die Konzentrationsvorrichtung (2) einen Metallfilter (8) umfasst.

9. Konzentrationsvorrichtung (2) nach Anspruch 8, **dadurch gekennzeichnet, dass** der Filter (8) ein elektrogeformtes Nickelsieb umfasst.

10. Konzentrationsvorrichtung (2) nach Anspruch 9, wobei der Filter (8) eine homogene Lochdichte hat.

11. Konzentrationsvorrichtung (2) nach einem der Ansprüche 3 - 10, **dadurch gekennzeichnet, dass** sich die Antriebsfläche (10') des Ultraschallwandlers (10) parallel zum Filter (8) erstreckt und konfiguriert ist, Ultraschallwellen (11) in Richtung des Filters (8) zu senden.

12. Konzentrationsvorrichtung (2) nach einem der Ansprüche 3 - 11, wobei sich der Filter (8) im Wesentlichen rechtwinklig zur Längsachse des Wandlers (10) erstreckt.

13. Analysesystem (54) zum Unterziehen eines Konzentrats (26) einer Bildanalyse, wobei das Analysesystem (54) eine Konzentrationsvorrichtung (2) nach Anspruch 3 umfasst.

14. Analysesystem (54) nach Anspruch 13, wobei die Vorrichtung (2) konfiguriert ist, *Cryptosporidium-Oozysten* und *Giardia-Zysten* zu konzentrieren.

## Revendications

1. Utilisation d'un dispositif de concentration (2) pour surveiller la qualité de l'eau potable par analyse d'image de contaminants protozoaires après filtration, ledit dispositif (2) comprenant :
un filtre (8) configuré pour filtrer des particules (4) d'une taille prédéfinie dans le volume du fluide (6),
le dispositif de concentration (2) comprenant un transducteur à ultrasons (10) qui est configuré pour nettoyer le filtre (8) ;
et le dispositif de concentration (2) comprenant un carter (12) ayant une cavité (14), laquelle cavité (14) est séparée en un premier volume (16) et un deuxième volume (18) par le filtre (8) ;
le carter (12) ayant un orifice d'entrée (20) en communication fluide avec le premier volume (16) et le carter (12) ayant un orifice de sortie (22) en communication fluide avec le deuxième volume (18) et les particules (4) étant concentrées dans le premier volume (16) ; et le transducteur à ultrasons (10) ayant une surface de commande (10') disposée dans le deuxième volume (18) ;
le carter (12) ayant un orifice de sortie de concentré (24) en communication fluide avec le premier volume (16) et le dispositif de concentration (2) comprenant des moyens pour le pompage du concentré (26) hors du premier volume (16) vers un dispositif d'analyse (50) ou un récipient de collecte pour analyse supplémentaire, à travers l'orifice de sortie de concentré (24) ; ledit filtre (8) ayant une forme de plaque.

2. Utilisation selon la revendication 1, dans lequel ledit dispositif (2) est configuré pour concentrer des oocystes de cryptosporidium et des kystes de Giardia.

3. Dispositif de concentration (2) pour la filtration par concentration de particules (4) à partir d'un volume d'un fluide (6) pour surveiller de l'eau en ce qui concerne la survenue de contaminants protozoaires,
lequel dispositif de concentration (2) comprend un filtre (8) configuré pour filtrer des particules (4) d'une taille prédéfinie dans le volume du fluide (6),
le dispositif de concentration (2) comprenant un transducteur à ultrasons (10) qui est configuré pour nettoyer le filtre (8) ;
et le dispositif de concentration (2) comprenant un carter (12) ayant une cavité (14), laquelle cavité (14) est séparée en un premier volume (16) et un deuxième volume (18) par le filtre (8) ;
le carter (12) ayant un orifice d'entrée (20) en communication fluide avec le premier volume (16) et le carter (12) ayant un orifice de sortie (22) en communication fluide avec le deuxième volume (18) et les particules (4) étant concentrées dans le premier volume (16) ; et le transducteur à ultrasons (10) ayant une surface de commande (10') disposée dans le deuxième volume (18) ;
le carter (12) ayant un orifice de sortie de concentré (24) en communication fluide avec le premier volume (16) et le dispositif de concentration (2) comprenant des moyens pour le pompage du concentré (26) hors du premier volume (16) vers un dispositif d'analyse (50) ou un récipient de collecte pour analyse supplémentaire, à travers l'orifice de sortie de concentré (24) ; ledit filtre (8) ayant une forme de plaque.

4. Dispositif de concentration (2) selon la revendication 3, dans lequel ledit dispositif de concentration (2) est configuré pour concentrer des oocystes de cryptosporidium et des kystes de Giardia.

5. Dispositif de concentration (2) selon la revendication 3 ou 4, **caractérisé en ce que** le dispositif de concentration (2) comprend des moyens pour fournir du gaz ou de l'air de chaque côté d'un volume de concentré (26) et pour extraire le volume de concentré (26) par pompage tout en conservant le gaz ou l'air de chaque côté d'un volume de concentré (26).

6. Dispositif de concentration (2) selon l'une quelconque des revendications 3 à 5, **caractérisé en ce que** le dispositif de concentration (2) est configuré pour démarrer et exécuter un nettoyage du filtre (8) par ultrasons pendant une filtration.

7. Dispositif de concentration (2) selon l'une quelconque des revendications 3 à 6, **caractérisé en ce que** ledit filtre (8) est monté de manière détachable.

8. Dispositif de concentration (2) selon l'une quelconque des revendications 3 à 7, **caractérisé en ce que** le dispositif de concentration (2) comprend un filtre métallique (8).

9. Dispositif de concentration (2) selon la revendication 8, **caractérisé en ce que** ledit filtre (8) comprend un écran de nickel électro-formé.

10. Dispositif de concentration (2) selon la revendication 9, dans lequel ledit filtre (8) a des densités de trous homogènes.

11. Dispositif de concentration (2) selon l'une quelconque des revendications 3 à 10, **caractérisé en ce que** la surface de commande (10') du transducteur à ultrasons (10) s'étend en parallèle au filtre (8) et est configurée pour envoyer des ondes ultrasonores (11) vers lui.

12. Dispositif de concentration (2) selon l'une quelconque des revendications 3 à 11, dans lequel ledit filtre (8) s'étend basiquement perpendiculairement à l'axe longitudinal dudit transducteur (10).

13. Système d'analyse (54) pour soumettre un concentré (26) à une analyse d'image, ledit système d'analyse (54) comprenant un dispositif de concentration (2) selon la revendication 3.

14. Système d'analyse (54) selon la revendication 13, dans lequel ledit dispositif (2) est configuré pour concentrer des oocystes de cryptosporidium et des kystes de Giardia.
